(19) Europäisches Patentamt
European Patent Office
Office européen des brevets

(11) Veröffentlichungsnummer: **0 170 939**
**B1**

(12) # EUROPÄISCHE PATENTSCHRIFT

(45) Veröffentlichungstag der Patentschrift: **20.07.88**

(21) Anmeldenummer: **85108805.4**

(22) Anmeldetag: **15.07.85**

(51) Int. Cl.[4]: **C 10 M 169/00**, C 08 L 83/04 // C10N40:14,(C10M169/00, 107:50, 113:12, 125:26, 155:02),(C08L83/04, 83:08)

(54) **Elektroviskose Flüssigkeiten.**

(30) Priorität: **26.07.84 DE 3427499**

(43) Veröffentlichungstag der Anmeldung: **12.02.86 Patentblatt 86/7**

(45) Bekanntmachung des Hinweises auf die Patenterteilung: **20.07.88 Patentblatt 88/29**

(84) Benannte Vertragsstaaten: **AT BE CH DE FR GB IT LI LU NL SE**

(56) Entgegenhaltungen:
**FR-A-1 480 184**
**US-A-3 047 507**
**US-A-3 344 066**
**US-A-4 419 254**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**
Patentinhaber: **METZELER Gesellschaft mit beschränkter Haftung, Gneisenaustrasse 15, D-8000 München 50 (DE)**

(72) Erfinder: **Goossens, John, IR., Roggendorfstrasse 51, D-5000 Koeln 80 (DE)**
Erfinder: **Oppermann, Günter, Dr., Fichtestrasse 50, D-5090 Leverkusen 1 (DE)**
Erfinder: **Grape, Wolfgang, Dr., Roggendorfstrasse 61, D-5000 Köln 80 (DE)**
Erfinder: **Härtel, Volker, Dr., Fichtestrasse 50, D-8034 Germering (DE)**

**EP 0 170 939 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung geht aus von elektroviskosen Suspensionen, welche mehr als 25 Gew.-% Silikagel mit einem Wassergehalt von 1 bis 15 Gew.-% als disperse Phase und Silikonöl als flüssige Phase, sowie ein Dispergiermittel enthalten.

Elektroviskose Flüssigkeiten (EVF) sind Dispersionen feinverteilter hydrophiler Feststoffe in hydrophoben elektrisch nicht leitenden Ölen, deren Viskosität sich unter dem Einfluß eines hinreichend starken elektrischen Feldes sehr schnell und reversibel vom flüssigen bis zum plastischen oder festen Zustand erhöhen läßt. Zur Änderung der Viskosität kann man sowohl elektrische Gleichfelder als auch Wechselfelder benutzen. Die dabei durch die EVF fließenden Ströme sind extrem niedrig. Daher lassen sich EVF überall dort einsetzen, wo die Übertragung großer Kräfte mit Hilfe geringer elektrischer Leistungen gesteuert werden soll, z. B. in Kupplungen, Hydraulikventilen, Stoßdämpfern, Vibratoren oder Vorrichtungen zum Positionieren und Festhalten von Werkstücken. Bei einer Reihe von Bauelementen auf der Basis von EVF kommt die EVF unmittelbar mit elastomeren Werkstoffen in Berührung. Es hat sich herausgestellt, daß die meisten in der Literatur beschriebenen EVF in solchen Fällen nicht geeignet sind, da sie Öle oder Lösungsmittel enthalten, welche elastomere Werkstoffe angreifen oder anquellen und unter Umständen sogar auflösen. Eine weitere von der Praxis hergestellte Anforderung besteht darin, daß die EVF in einem Temperaturbereich von ca. -50°C bis 150°C flüssig und chemisch beständig ist und zumindest in einem Temperaturbereich von -30°C bis 110°C einen ausreichenden elektroviskosen Effekt zeigt. Schließlich muß auch gewährleistet sein, daß die EVF in einem langen Zeitraum stabil bleibt, d.h. keine Phasentrennung stattfindet und sich insbesondere kein schwer redispergierbares Sediment bildet.

EVF auf Basis Silikagel/Silikonöl wurden bereits im US Patent 30 47 507 beschrieben. Die hier benutzten Dispergiermittel, wie z. B. Sorbitansesquioleat, aber auch andere Tenside, führen praktisch immer zu EVF, die besonders bei höheren Temperaturen eine zu geringe Elektroreaktivität und eine zu hohe elektrische Leitfähigkeit aufweisen. Bei zu hoher Leitfähigkeit werden zur Anregung der EVF zu hohe Ströme und damit zu hohe elektrische Leistungen benötigt, bzw. es lassen sich in der EVF keine genügend hohen elektrischen Felder erzeugen.

Hier setzt die Erfindung an. Es lag die Aufgabe zugrunde, EVF zu entwickeln, die auch bei hohen Temperaturen (bis 110°C) eine hohe Elektroreaktivität und eine geringe elektrische Leitfähigkeit besitzen.

Diese Aufgabe wird ausgehend von einer elektroviskosen Suspension auf der Basis von Silikagel und Silikonöl erfindungsgemäß dadurch gelöst, daß ein Dispergiermittel zugesetzt wird, das aus aminofunktionellen, hydroxyfunktionellen, carboxyfunktionellen oder alkoxyfunktionellen Polysiloxanen mit einem Molekulargewicht > 800 besteht. Dabei sind die Polysiloxane mit einer Konzentration von 1 bis 30 Gew.-%, vorzugsweise 5 bis 20 Gew.-%, bezogen auf die Silikagelteilchen, zugesetzt.

Vorzugsweise haben die als Dispergatoren eingesetzten aminofunktionellen Polysiloxane folgende allgemeine Formel

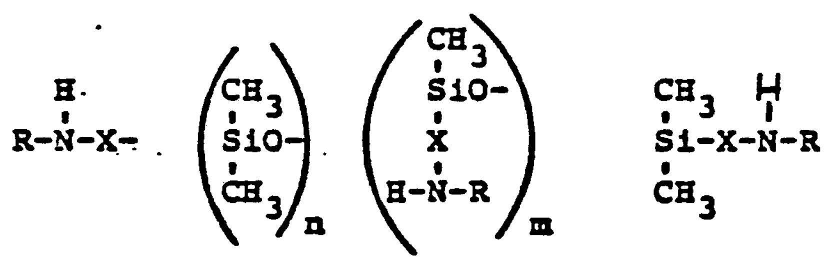

wobei

$10 < n < 1000$

m = 0 bis 5,

R = H oder Alkyl mit 1 bis 8 Atomen und

X ein zweiwertiger Rest ist, der aus C, H, und gegebenenfalls 0 und/oder N besteht.

Die Verknüpfung der Aminogruppen mit dem Silikongrundkörper erfolgt entweder über eine SiC- oder über eine SiOC-Bindung. Ist eine SiC-Bindung gewünscht, so steht X für einen zweiwertigen Kohlenwasserstoffrest mit 1 bis 6, vorzugsweise 1 bis 3 Kohlenstoffatomen. Besonders bevorzugt als aminofunktioneller Rest sind die Aminomethyl- und γ-Aminopropylgruppierung. Der zweiwertige Rest X kann außer C und H auch N enthalten. So kann X z. B. die Gruppierung $CH_2$-$CH_2$-$CH_2$-NH-$CH_2$-$CH_2$-$NH_2$ bedeuten. Ist eine SiOC-Verknüpfung gewünscht, so ist der aminofunktionelle Rest

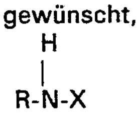

eine Aminoalkoxygruppierung. Aus Gründen der Hydrolysestabilität ist eine sekundäre SiOC-Verknüpfung bevorzugt. Besonders geeignet ist dabei der 1-Amino-2-Propoxyrest

$CH_3$
|
$-OC-CH_3-NH_2$
|
H

oder der 1-Amino-3-Butoxyrest

$Ch_3$
|
$-OC-CH_2-CH_2-NH_2.$
|
H

Anstelle von aminofunktionellen Polysiloxanen können auch siliziumfunktionelle Polysiloxane der allgemeinen Formel

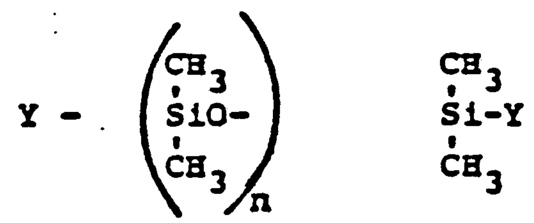

als Dispergiermittel eingesetzt werden. Dabei ist $10 < n < 1000$.

Y stellt eine Hydroxy-, eine Alkoxy- oder Carboxygruppe dar.

Bevorzugt enthalten die vorgenannten als Dispergiermittel verwendbaren funktionellen Polysiloxane 20 bis 300 Dimethylsiloxaneinheiten. Diese ermöglichen insbesondere die Herstellung von Dispersionen mit hohem Feststoffgehalt bei nicht zu hoher Grundviskosität.

Mit der Erfindung werden folgende Vorteile erzielt:

Die erfindungsgemäßen EVF zeigen überraschenderweise sowohl große Elektroreaktivitäten als auch niedrige elektrische Leitfähigkeiten, die nur wenig von der Temperatur abhängen.

Sie sind ferner mit elastomeren Werkstoffen, insbesondere mit Gummi bestens verträglich, absetzstabil und physiologisch indifferent (ungiftig). Außerdem sind sie innerhalb eines ungewöhnlich weiten Temperaturbereichs wärme- und kältebeständig und weisen nur eine geringe Temperatur- und Druckabhängigkeit der Viskosität auf. Darüber hinaus haben die erfindungsgemäßen elektroviskosen Suspensionen günstige, nur wenig von der Temperatur und der Frequenz abhängige dielektrische Werte und eine hohe elektrische Durchschlagsfestigkeit. Als weiterer Vorteil ist hervorzuheben, daß die Herstellung der EVF relativ einfach und daher preisgünstig ist und handelsübliche Produkte als Ausgangsstoffe verwendet werden können.

Im folgenden wird die Erfindung anhand von Beispielen, die in Diagrammen und mittels einer Tabelle verdeutlicht werden, näher erläutert. Es zeigen:

Fig. 1 die Abhängigkeit der bei der EVF gemessenen Schubspannung als Funktion der elektrischen Feldstärke bei konstanter Schergeschwindigkeit,

Fig. 2 die elektrische Leitfähigkeit der EVF als Funktion der Feldstärke bei konstanter Schergeschwindigkeit und

die Tabelle die charakteristischen Daten der erfindungsgemäßen EVF im Vergleich zum Stand der Technik. Es werden die verfahrenstechnischen Maßnahmen zur Herstellung der EVF, der chemische Herstellungsweg für die Dispergatoren, die zur Kontrolle der gewünschten physikalischen Eigenschaften erforderliche Meßtechnik sowie typische Ausführungsbeispiele für die erfindungsgemäßen EVF angegeben.

Zur Herstellung von EVF können handelsübliche Silikagele verwendet werden. Bei Bedarf kann der Feuchtegehalt des Silikagels erhöht oder erniedrigt werden. Bei der Herstellung der Dispersionen wird das Silikonöl und ein Teil oder die gesamte Menge Dispergiermittel vorgelegt und unter ständigem Umrühren das Silikagel in das Silikonöl eingerührt. Am Anfang kann das Silikagel schnell eindosiert werden, während gegen Ende mit zunehmender Viskosität das Silikagel langsam zugegeben wird. Wird am Anfang nur ein Teil des Dispergiermittels vorgelegt, so wird während der Zugabe des Silikagels die restliche Dispergiermittelmenge gleichzeitig mitzugegeben. Für die Endeigenschaften der EVF ist die Herstellungsprozedur aber nicht kritisch. Auch die Art der Vermischung ist nicht kritisch für die Endeigenschaften der EVF. Es können z. B. einfache Rührvorrichtungen, Kugelmühlen oder Ultraschall zur Dispergierung verwendet werden. Bei einer intensiven Vermischung können die Dispersionen aber im allgemeinen schneller hergestellt werden und dabei auch etwas feinteiliger werden.

Die Menge des benötigten Dispergiermittels hängt stark von der spezifischen Oberfläche des verwendeten Silikagels ab. Als Richtwert werden ca. 1 bis 4 $mg/m^2$ benötigt. Die absolut benötigte Menge hängt aber weiter noch von der Art des verwendeten Silikagels, sowie des Dispergiermittels ab.

Handelsübliche Silikagele sind z. B. Ultrasil, Durosil, Extrusil der Fa. Degussa oder Vulkasil-, Silikasil-und Baysikal-Typen der Fa. Bayer. Die verwendeten Silikagele brauchen kein reines $SiO_2$ zu sein und können ohne

weiteres bis zu 20 Gew.-% $Al_2O_3$, $Na_2O$ und CaO enthalten. Weiter können oft noch einige Gewichtsprozent $SO_3$, Cl und $Fe_2O_3$ vorhanden sein. Der Glühverlust, d.i. der Gewichtsverlust bei 1000°C, bewegt sich im allgemeinen zwischen 10 und 15 Gew.-%. Hiervon sind im Schnitt ca. 6 Gew.-% Feuchte, was gleichbedeutend ist mit dem Gewichtsverlust, der durch Trocknen bei 105°C bestimmt wird. Die spezifische Oberfläche, gemessen nach der BET-Methode, beträgt im allgemeinen zwischen 20 und 200 $m_2/g$. Sie ist jedoch nicht kritisch und kann durchaus etwas kleiner oder größer sein. Eine zu kleine spezifische Oberfläche führt aber leicht zu unerwünscht groben Dispersionen, während eine zu hohe spezifische Oberfläche zu einem zu großen Dispergiermittelbedarf führen kann.

Als Dispersionsmedium geeignete Silikonöle sind Polydimethylsiloxane und polymere Methylphenylsiloxane. Die geeigneten Öle haben bei Raumtemperatur eine Viskosität von ca. 3 bis 300 $mm^2/s$. Im allgemeinen sind aber die niedrigviskosen Öle zu bevorzugen (3 bis 20 $mm^2/s$), weil hiermit eine niedrigere Grundviskosität der EVF erreicht wird, so daß mittels des elektroviskosen Effektes starke Viskositätsänderungen erzielt werden können.

Die Herstellung der als Dispergator verwendeten aminomodifizierten Polysiloxane ist dem Fachmann im Prinzip bekannt, variiert aber, je nachdem welche Art der Verknüpfung gewünscht wird. Verbindungen des Typs

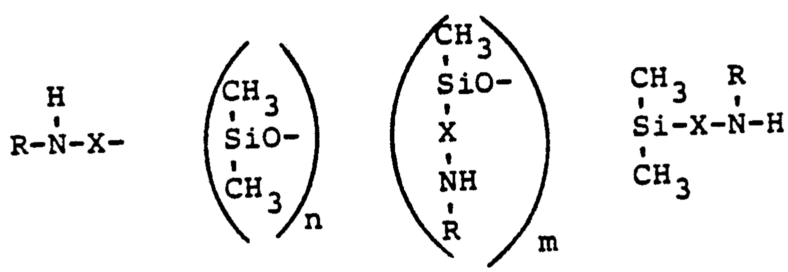

wobei n und m die oben angegebene Bedeutung haben und X = $CH_2$ ist, werden hergestellt aus den entsprechenden Halogenderivaten (Cl oder Br) und dem entsprechenden Amin nach:

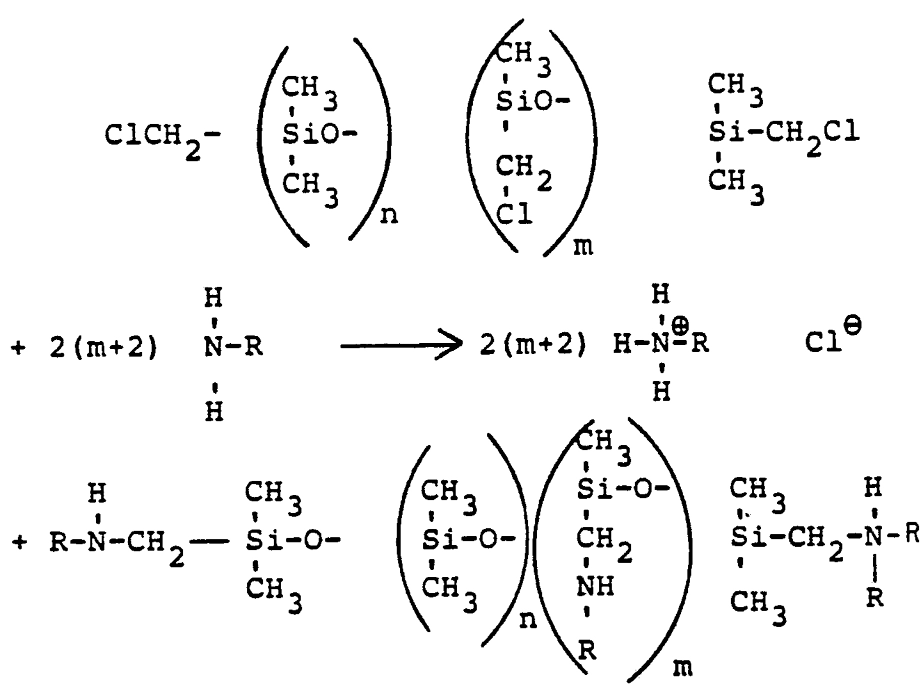

Die Cl-haltige Verbindung wird hergestellt durch Cohydrolyse gewünschter Mengen von $ClCH_2(CH_3)_2SiCl$, $ClCH_2(CH_3)SiCl_2$ und $(CH_3)_2SiCl_2$. Natürlich kann anstelle von Cl auch Br eingesetzt werden.

Verbindungen des obengenannten Typs, wobei X ein Alkylrest mit 2 bis 6 C-Atomen ist, können beispielsweise hergestellt werden durch platinkatalysierte Addition eines geeigneten Olefins an SiH-haltige Verbindungen. So reagiert beispielsweise Allylchlorid mit einem Silikonöl der Formel

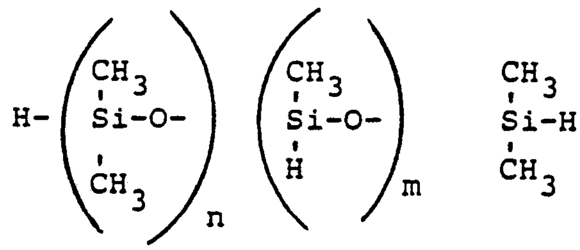

zu einem γ-chlorfunktionellen Silikonöl, das analog zu oben für X = $CH_2$ beschriebenen Reaktion zu dem gewünschten aminofunktionellen Öl umgesetzt werden kann. Alternative Wege sind dem Fachmann im Prinzip ebenfalls geläufig.

Verbindungen des obengenannten Dispergatortyps, bei denen X für eine Aminoalkoxygruppierung steht, können hergestellt werden durch Umsetzung von siliziumfunktionellen Ölen, die beispielsweise SiCl, $SiOCH_2H_5$,

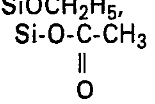

oder SiH-Gruppierungen enthalten mit Aminoalkanolen, gegebenenfalls unter Zusatz geeigneter Katalysatoren. Besonders geeignet ist dabei 1-Propanolamin. Im Falle der aminoalkoxyfunktionellen Systeme kann m (vorteilhaft) den Wert 0 annehmen. Besonders bevorzugt als Dispergator ist ein aminoalkoxyfunktionelles Polysiloxan der Formel

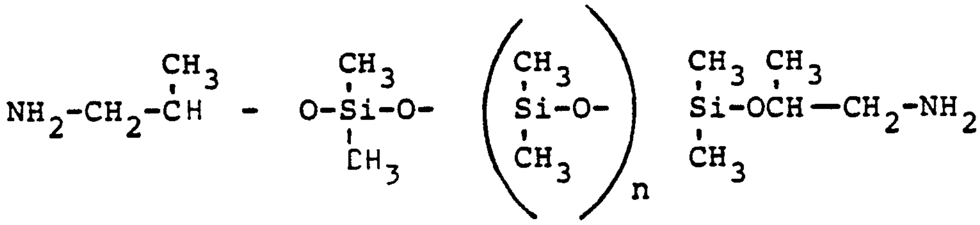

wobei n einen Wert zwischen 15 und 100 annimmt, bevorzugt zwischen 30 und 70.

Es ist weiterhin möglich, zunächst das Silan

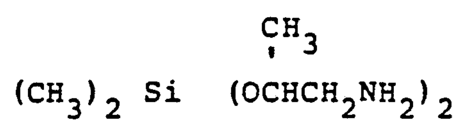

herzustellen und anschließend durch eine basisch katalysierte Äquilibrierungsreaktion unter Zusatz von Oktamethylcyclotetrasiloxan einen Kettenaufbau durchzuführen.

Die so hergestellten EVF wurden in einem modifizierten Rotationsviskosimeter untersucht, wie es bereits von W.M. Winslow in J. Appl. Phys. 20 (1949) Seite 1137-1140 beschrieben wurde.

Die Elektrodenfläche des inneren rotierenden Zylinders mit einem Durchmesser von 50 mm beträgt ca. 78 $cm^2$, die Spaltweite zwischen den Elektroden 0,58 mm. Bei den dynamischen Messungen kann die Scherbelastung bis maximal 2330 $s^{-1}$ eingestellt werden. Der Meßbereich des Viskosimeters für die Schubspannung beträgt maximal 750 Pa. Es sind statische und dynamische Messungen möglich. Die Anregung der EVF kann sowohl mit Gleichspannung als auch mit Wechselspannung erfolgen.

Bei Anregung mit Gleichspannung können bei einigen Flüssigkeiten neben der spontanen Erhöhung der Viskosität oder der Fließgrenze beim Einschalten des Feldes auch noch langsame Abscheidungsvorgänge der festen Teilchen auf den Elektrodenoberflächen stattfinden, die das Meßergebnis verfälschen, insbesondere bei kleinen Schergeschwindigkeiten, bzw. bei statischen Messungen. Daher wird die Prüfung der EVF bevorzugt mit Wechselspannung und bei dynamischer Scherbeanspruchung durchgeführt. Man erhält so gut reproduzierbare Fließkurven.

Zur Bestimmung der Elektroreaktivität stellt man eine konstante Schergeschwindigkeit $0 < D < 2330\ s^{-1}$ ein und mißt die Abhängigkeit der Schubspannung τ von der elektrischen Feldstärke E. Mit der Prüfapparatur können Wechselfelder bis zu einer maximalen effektiven Feldstärke von 2370 kV/m bei einem maximalen effektiven Strom von 4 mA und einer Frequenz von 50 Hz erzeugt werden. Man erhält dabei Fließkurven entsprechend Fig. 1. Man erkennt, daß die Schubspannung τ bei kleinen Feldstärken zunächst parabelförmig und bei größeren Feldstärken linear ansteigt. Die Steigung S des linearen Teils der Kurve kann aus Fig. 1 entnommen werden und wird in kPa.m/kV angegeben. Aus dem Schnittpunkt der Geraden S mit der Geraden $\tau = \tau_0$ (Schubspannung ohne elektrisches Feld) wird der Schwellwert $E_0$ der elektrischen Feldstärke bestimmt

und in kV/m angegeben. Für die Erhöhung der Schubspannung $\tau$ (E)- $\tau_0$ im elektrischen Feld E > $E_0$ gilt:

$\tau$ (E)-$\tau_0$ = S(E-$E_0$).

Die Messungen kann man mit verschiedenen Schergeschwindigkeiten D wiederholen. Die dabei bestimmten Werte für $E_0$ und S streuen i.a. in einem Bereich von ca. + 5 % bis ± 20 % um den Mittelwert.

Die elektrische Leitfähigkeit æ wird aus der effektiven Stromdichte I und der effektiven Feldstärke E bestimmt. Bei konstanter Schergeschwindigkeit D steigt die Leitfähigkeit bei höheren Feldstärken E > $E_0$ linear mit der elektrischen Feldstärke an (siehe Fig. 2). Aus Fig. 2 ergibt sich die Steigung L der elektrischen Leitfähigkeit æ mit der Feldstärke E in nS/kV und der Schnittpunkt $K_0$ der eingezeichneten Geraden L mit der Ordinate (E = O) in nS/m. $K_0$ kann auch negative Werte annehmen. Für E > $E_0$ kann damit die Leitfähigkeit æ nach der Gleichung

æ (E) = L . E + $K_0$

berechnet werden.

Bei den nachfolgend beschriebenen Ausführungsbeipielen entsprechen die Rezepturen Nr. 1 bis 4 dem Stand der Technik. Bei den Beispielen Nr. 5 bis 10 handelt es sich um die erfindungsgemäßen EVF.

**Ausführungsbeispiele**

| | | |
|---|---|---|
| **Silikagel 1:** | ca. 80 | Gew.-% $SiO_2$ |
| | ca. 6 | Gew.-% CaO |
| | ca. 3 | Gew.-% $Na_2O$ |
| | < 0,4 | Gew.-% $Al_2O_3$ |
| Glühverlust nach DIN 55921/2: | ca. 7 | Gew.-% |
| Trocknungsverlust nach DIN 55921/2: | ca. 6 | Gew.-% |
| BET-Oberfläche: | ca. 35 $m^2/g$ | |

| | |
|---|---|
| Silikonöl: Polydimethylsiloxan | |
| Viskosität bei 25°C: | 5 $mm^2S^{-1}$ |
| Dichte bei 25°C: | 0,9 $g/cm^3$ |
| Dielektrizitätszahl Er nach DIN 53483 bei 0°C und 50 Hz: | 2.8 |
| Verlustfaktor tan δ nach DIN 53483 bei 0°C und 50 Hz: | $2.10^{-4}$ |

**Ausführungsbeispiele**

| | | |
|---|---|---|
| **Silikagel:** | ca. 80 | Gew.-% $SiO_2$ |
| | ca. 6 | Gew.-% CaO |
| | ca. 3 | Gew.-% $Na_2O$ |
| | < 0,4 | Gew.-% $Al_2O_3$ |
| Glühverlust nach DIN 55921/2: | ca. 7 | Gew.-% |
| Trocknungsverlust nach DIN 55921/2: | ca. 6 | Gew.-% |
| BET-Oberfläche: | ca. 35 $m^2/g$ | |

| | |
|---|---|
| Silikonöl: Polydimethylsiloxan | |
| Viskosität bei 25°C: | 5 $mm^2S^{-1}$ |
| Dichte bei 25°C: | 0,9 $g/cm^3$ |
| Dielektrizitätszahl Er nach DIN 53483 bei 0°C und 50 Hz: | 2.8 |
| Verlustfaktor tan δ nach DIN 53483 bei 0°C und 50 Hz: | $2.10^{-4}$ |

**Beispiel Nr. 1**

40 Gewichtsteile Silikagel 1
60 Gewichtsteile Silikonöl
4 Gewichtsteile Sorbitanmonooleat

**Beispiel Nr. 2**

40 Gewichtsteile Silikagel 1
60 Gewichtsteile Silikonöl
4 Gewichtsteile Sorbitansesquioleat

**Beispiel Nr. 3**

40 Gewichtsteile Silikagel 1
60 Gewichtsteile Silikonöl
4 Gewichtsteile Glycerolmono- und dioleat (Atmos 300)

**Beispiel Nr. 4**

40 Gewichtsteile Silikagel 1
60 Gewichtsteile Silikonöl
6 Gewichtsteile 2-Heptadecenyl-4-ethyl-2-oxazolin-4-methanol

**Beispiel Nr. 5**

40 Gewichtsteile Silikagel 1
60 Gewichtsteile Silikonöl
2 Gewichtsteile $M'_2D_{16}$

**Beispiel Nr. 6**

40 Gewichtsteile Silikagel 1
60 Gewichtsteile Silikonöl
4 Gewichtsteile $M_2''D_{28}$

**Beispiel Nr. 7**

40 Gewichtsteile Silikagel 1
60 Gewichtsteile Silikonöl
2 Gewichtsteile $M'_2D'_2D_{69}$

**Beispiel Nr. 8**

50 Gewichtsteile Silikagel 1
50 Gewichtsteile Silikonöl
2,5 Gew.-teile $M'_2D_{120}$

**Beispiel Nr. 9**

40 Gewichtsteile Silikagel 1
60 Gewichtsteile Silikonöl
4 Gewichtsteile $HO\text{-}D_{200}\text{-}H$

**Beispiel Nr. 10**

40 Gewichtsteile Silikagel 1
60 Gewichtsteile Silikonöl
4 Gewichtsteile 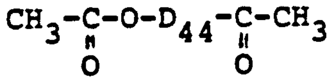

mit

D = 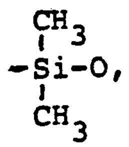, M' = 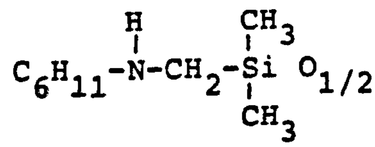

D' = 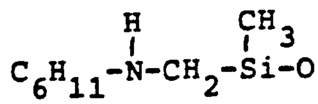

M" = 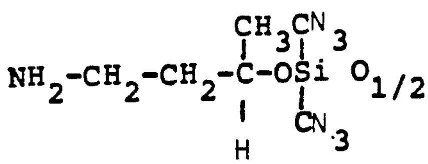

| Bsp. Nr. | Dynamischer elektroviskoser Effekt 25°C Eo[kV/m] | S[Pa.m/kV]x $10^{-3}$ | 90°C Eo[kV/m] | S[Pa.m/kV]x $10^{-3}$ | Wechselstromleitfähigkeit 25°C Ko[nS/m] | L[nS/kV]x $10^{-3}$ | 90°C Ko[nS/m] | L[nS/kV]x $10^{-3}$ |
|---|---|---|---|---|---|---|---|---|
| 1 | 587 | 561 | 172 | 177 | 46 | 6 | -32 | 2256 |
| 2 | 783 | 472 | 232 | 273 | 43 | 4 | -96 | 1373 |
| 3 | 119 | 259 | Messung nicht möglich | | 1027 | 1840 | Messung nicht möglich | |
| 4 | 747 | 289 | 319 | 228 | 32 | 5 | 16 | 520 |
| 5 | 480 | 419 | 419 | 394 | 41 | 5 | 1 | 150 |
| 6 | 557 | 390 | 433 | 548 | 32 | 2 | 20 | 110 |
| 7 | 574 | 389 | 433 | 608 | 35 | 1 | 107 | 20 |
| 8 | 689 | 537 | 271 | 786 | 38 | 4 | 141 | 37 |
| 9 | 726 | 427 | 468 | 569 | 36 | 3 | 28 | 51 |
| 10 | 704 | 441 | 443 | 646 | 35 | 3 | 59 | 58 |

**Patentansprüche**

1. Elektroviskose Suspensionen, welche mehr als 25 Gew.-% Silikagel mit einem Wassergehalt von 1 bis 15 Gew.-% als disperse Phase und Silikonöl als flüssige Phase sowie ein Dispergiermittel enthalten, dadurch gekennzeichnet, daß das Dispergiermittel aus aminofunktionellen oder hydroxyfunktionellen oder carboxyfunktionellen oder alkoxyfunktionellen Polysiloxanen mit einem Molekulargewicht > 800 besteht.

2. Elektroviskose Dispersionen nach Anspruch 1, dadurch gekennzeichnet, daß die Polysiloxane mit einer Konzentration von 1 bis 30 Gew.-%, vorzugsweise 5 bis 20 Gew.-%, bezogen auf die Silikagel-Teilchen, zugesetzt sind.

3. Elektroviskose Dispersionen nach Anspruch 1 bis 2, dadurch gekennzeichnet, daß die aminofunktionellen Polysiloxane folgende Struktur haben:

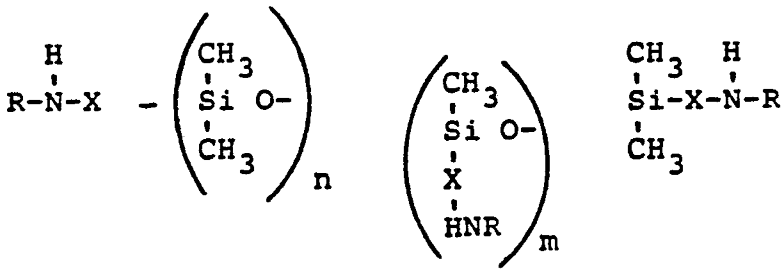

wobei $10 < n < 1000$, $m = 0$ bis 5,
R = H oder Alkyl mit 1 bis 8 Atomen
und X ein zweiwertiger Rest ist, der aus C, H und gegebenenfalls O und/oder N besteht.

4. Elektroviskose Dispersion nach Anspruch 3, dadurch gekennzeichnet, daß die aminofunktionellen Polysiloxane folgende Struktur besitzen:

$M'_2D_m'D_n$

wobei

M' = 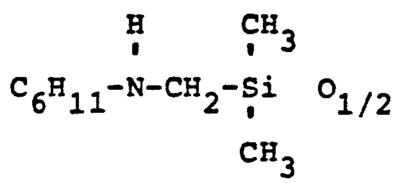

D' = 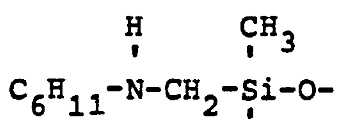

D = 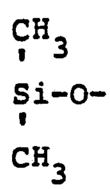

mit $m = 0$ bis 3
und $10 < n < 1000$ bedeuten.

5. Elektroviskose Dispersion nach Anspruch 1 bis 2, dadurch gekennzeichnet, daß die Polysiloxane folgende Struktur haben:

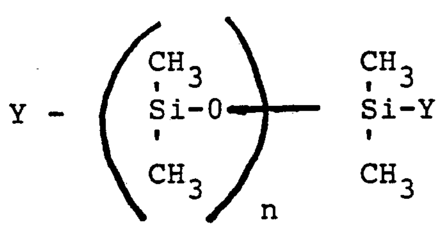

mit $10 < n < 1000$
wobei Y eine Hydroxy-, eine Alkoxy- oder Carboxy-Gruppe darstellt.

## Claims

1. Electroviscous suspensions containing more than 25 % by weight of silica gel with a water content of from 1 to 15 % by weight as disperse phase and silicone oil as liquid phase and a dispersing agent, characterised in that the dispersing agent consists of amino functional or hydroxy functional or carboxy functional or alkoxy functional polysiloxanes with a molecular weight > 800.

2. Electroviscous dispersions according to Claim 1, characterised in that the polysiloxanes are added at a concentration of from 1 to 30 % by weight, preferably from 5 to 20 % by weight, based on the silica gel particles.

3. Electroviscous dispersions according to Claims 1 to 2, characterised in that the amino functional polysiloxanes have the following structure:

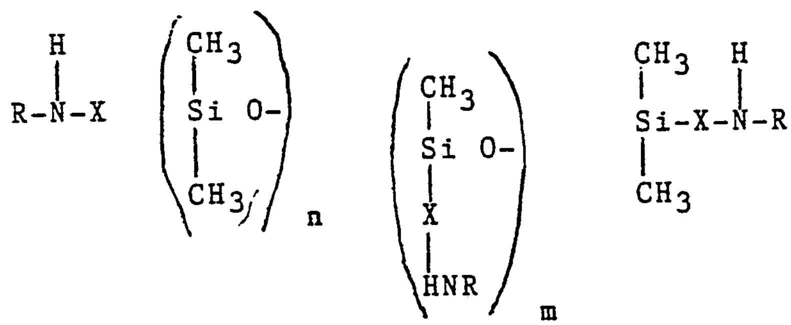

wherein 10 < n < 1000, m = 0 to 5, R = H or alkyl with 1 to 8 atoms and X is a divalent group consisting of C, H and optionally O and/or N.

4. Electroviscous dispersion according to Claim 3, characterised in that the amino functional polysiloxanes have the following structure: $M'_2D_m'D_n$

wherein

M' = 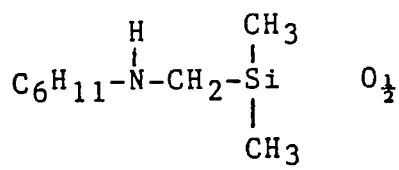

D' = 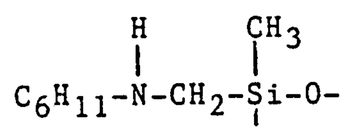

D = 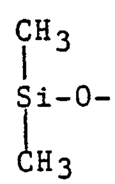

m = 0 to 3

and 10 < n < 1000

5. Electroviscous dispersion according to Claims 1 to 2, characterised in that the polysiloxanes have the following structure:

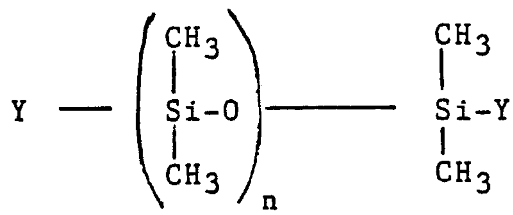

wherein 10 < n < 1000 and

Y denotes a hydroxyl group, an alkoxy group or a carboxy group.

**Revendications**

1. Suspensions électro-visqueuses qui contiennent plus de 25 % en poids de silicagel ayant une teneur en eau de 1 à 15 % en poids en tant que phase dispersée et de l'huile de silicone en tant que phase liquide, de même qu'un dispersant, caractérisées en ce que le dispersant consiste en polysiloxanes aminofonctionnels ou hydroxyfonctionnels ou carboxyfonctionnels ou alcoxyfonctionnels ayant un poids moléculaire supérieur à 800.

2. Dispersions électro-visqueuses selon la revendication 1, caractérisées en ce que les polysiloxanes sont ajoutés à une concentration de 1 à 30 % en poids, de préférence de 5 à 20 % en poids par rapport aux particules de silicagel.

3. Dispersions électro-visqueuses selon les revendications 1 à 2, caractérisées en ce que les polysiloxanes aminofonctionnels ont la structure suivante:

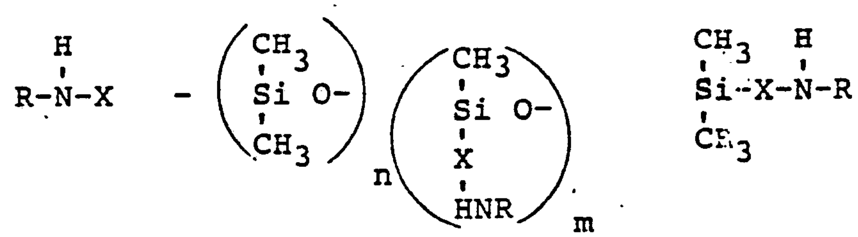

où 10 < n < 1000, m = 0 à 5,

R = H ou alcoyle ayant 1 à 8 atomes de carbone

et X un radical bivalent se

composant de C, H et éventuellement de O et/ou de N.

4. Dispersion électro-visqueuse selon la revendication 3, caractérisée en ce que les polysiloxanes aminofonctionnels possèdent la structure suivante: $M'_2D_m'D_n$

dans laquelle

M' = 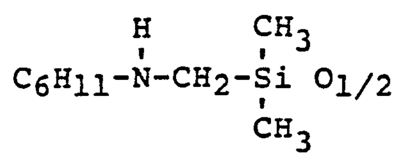

D' = 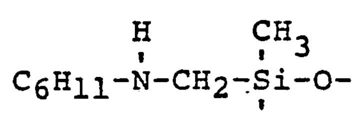

D = 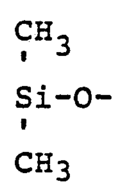

avec m = 0 à 3

et 10 < n < 1000.

5. Dispersion électro-visqueuse selon les revendications 1 à 2, caractérisée en ce que les polysiloxanes ont la structure suivante:

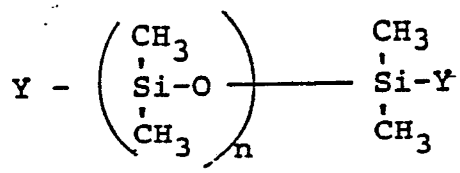

avec 10 < n < 1000
où Y représente un groupe hydroxy, un groupe alcoxy ou un groupe carboxy.

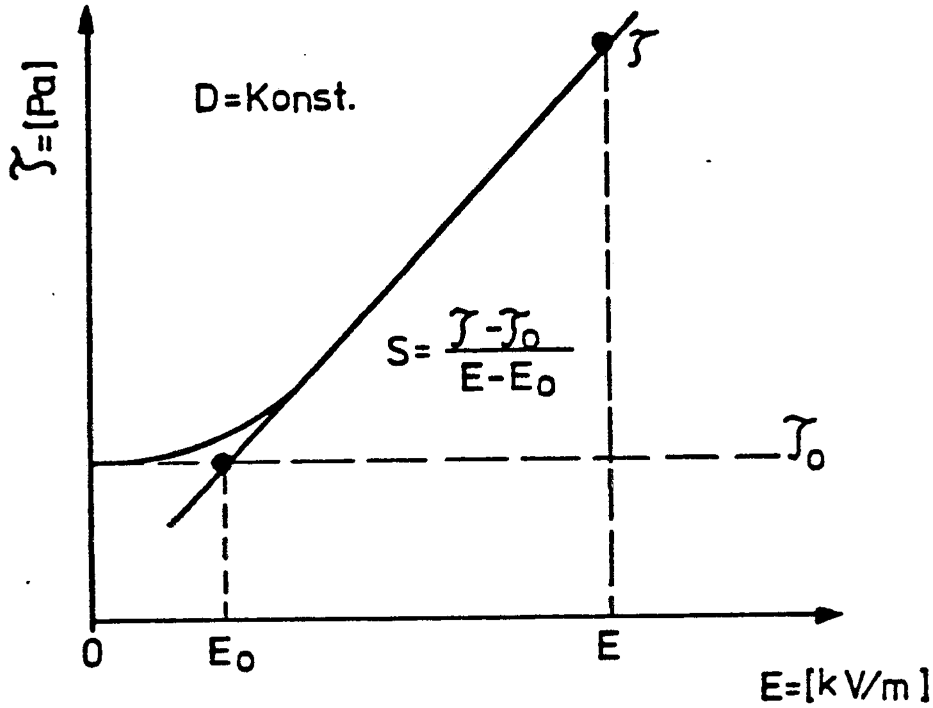
τ=[Pa]
D=Konst.
τ
S= (τ-τo)/(E-Eo)
τo
0
Eo
E
E=[kV/m]

FIG. 1

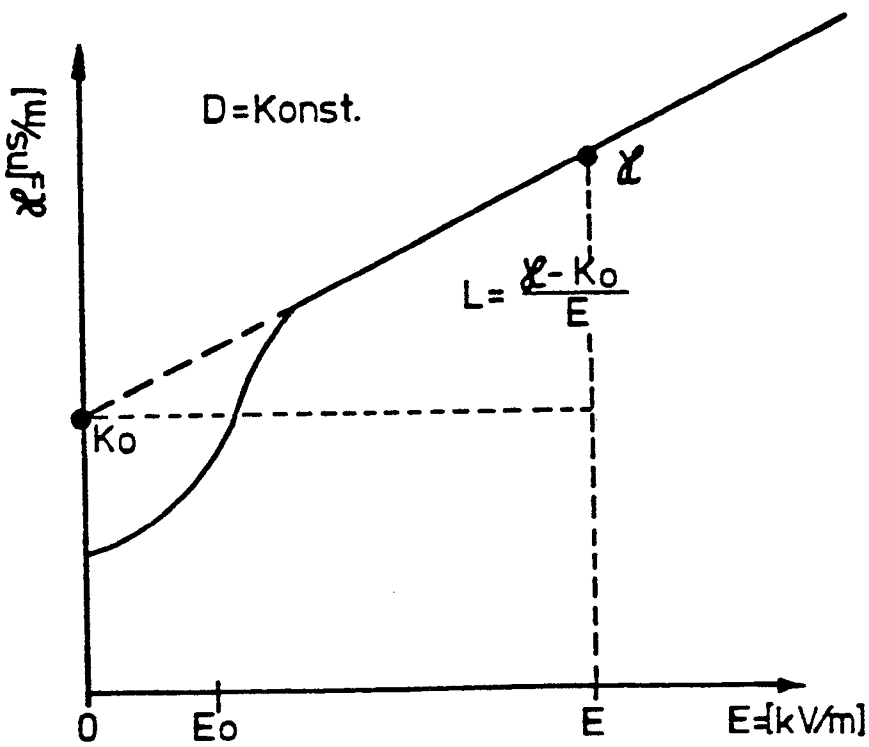
K=[mS/m]
D=Konst.
K
L= (K-Ko)/E
Ko
0
Eo
E
E=[kV/m]

FIG. 2